# EUROPEAN PATENT SPECIFICATION

(11) **EP 3 141 488 B1**
(45) Date of publication and mention of the grant of the patent: **22.04.2020**
(21) Application number: 15184410.7
(22) Date of filing: 09.09.2015
(51) Int. Cl.: B65B 51/30, B29C 65/00, B65B 57/08, B65B 61/18, B65B 9/13

(54) **PACKAGING MACHINE FOR PRODUCING PACKAGES FROM A SHEET OF PACKAGING MATERIAL**
VERPACKUNGSMASCHINE ZUR HERSTELLUNG VON VERPACKUNGEN AUS EINEM BOGEN VERPACKUNGSMATERIAL
MACHINE D'EMBALLAGE DE PRODUCTION D'EMBALLAGES À PARTIR D'UNE FEUILLE DE MATÉRIAU D'EMBALLAGE

(43) Date of publication of application: 15.03.2017
(73) Proprietor: Tetra Laval Holdings & Finance S.A., 1009 Pully (CH)
(72) Inventor: MAMELI, Alberto, 41121 Modena (IT)
(74) Representative: Tetra Pak - Patent Attorneys SE

(56) References cited:
- EP-A1- 1 195 322
- EP-A1- 1 785 358
- EP-A1- 2 418 154
- EP-A2- 0 999 130
- EP-A2- 0 999 134
- EP-A2- 2 779 390
- WO-A1-97/24278
- WO-A1-03/037722
- WO-A1-2012/163753
- US-A1- 2003 230 941
- US-A1- 2010 236 445
- US-B1- 6 625 517
- US-B1- 6 876 896

## Description

The invention relates to a packaging machine for producing packages from a sheet of packaging material.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material may also comprise a layer of gas- and light-barrier material, e.g. an aluminium foil or an ethyl vinyl alcohol (EVOH) foil, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material. The web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating. The web of packaging material so sterilized is maintained in a closed, sterile environment, and is folded and sealed longitudinally to form a vertical tube.

The tube is filled continuously downwards with the sterilized or sterile-processed food product, and is sealed and then cut along equally spaced cross sections to form pillow packs, which may be fed to a folding unit to form the finished packages.

The packaging machines may comprises a moulding station in which molten plastics is moulded onto the web of packaging material - before it is folded, filled and sealed - so as to form a pouring spout of an opening device of the package being produced.

The packaging machines comprise tools arranged for carrying out working operations on the packaging material so as to obtain the packages.

The packaging material comprises a plurality of marks, each mark being associated with a portion of the packaging material at which one of the above-mentioned working operations has to be carried out.

The packaging machines comprise a sensor, arranged in a fixed position, which reads the marks and controls the position of the tools.

A drawback of the known packaging machines is that the tools can be not properly positioned with respect to the respective portions of the packaging material at which working operations have to be carried out. This is mainly due to the deformability of the packaging material. In particular, the packaging material may undergo a certain deformation between the point in time when the mark is detected and the point in time when the tool carries out the working operation at the portion of packaging material associated with the mark. In this way, a mispositioning of the tool with respect to the corresponding portion of packaging material occurs, which can impair the production of the package.

The sensor reads the marks in a discrete manner, e.g. when each mark passes in front of the sensor.

Between two successive reading operations, e.g. between the reading of two consecutive marks, the position of the packaging material can only be predicted or "guessed". Due to deformations of the packaging material or dynamic events affecting the packaging material (for example the filling of the tube of packaging material with the food product to be packaged) the real position of the packaging material can differ from the predicted, or "guessed", position.

US6625517 discloses a machine with a position feedback system and a method for use thereof. The machine includes at least one movable element mounted for movement on a path and at least one programmable controller. The machine further includes at least two absolute or magnetostrictive sensors or the machine includes an absolute sensor and a non-absolute sensor. The programmable controller uses positional information from the sensors to determine the position of the movable elements on the path and control the movable elements.

US6876896 discloses system for performing a manufacturing operation at a predetermined position relative to a first path. The system includes a plurality of first elements mounted for movement relative to the first path. The first elements have a plurality of motion parameters which are independently controllable. Active elements are operatively associated with reactive elements to produce relative movement between the first elements and the first path, with the active elements controlling the relative movement. A controller controls the activation of the active elements and a first tool is associated with each first element for performing at least part of the manufacturing operation.

EP0999134 discloses packaging machine for forming pouches from a web of material having web tension control. An unwind reel is power-driven according to downstream web demand to thereby minimize tension spikes through the infeed section. An entire packaging machine may be provided using modules. The registration-related operations of each section are independently controlled so that each module need only coordinate input and/or output speeds with interfacing sections.

An object of the invention is to improve the known packaging machines.

Another object of the invention is to provide a packaging machine in which the tools that carry out working operations on the packaging material are positioned with high accuracy with respect to the packaging material.

In a first aspect of the invention, there is provided a packaging machine for producing packages from a sheet of packaging material, as claimed in claim 1.

Some preferred, non-limiting embodiment of the invention will be described by way of example with reference to the accompanying drawings, in which:
Figure 1 is a perspective view, with parts removed for clarity, of a packaging machine for producing packages form a sheet of packaging material, in accordance with the invention;
Figure 2 is a schematic side view of a working unit of the packaging machine of Figure 1;
Figure 3 is an enlarged detail of Figure 2;
Figure 4 is a plan view of the sheet of packaging material of Figure 1;
Figure 5 is a side view of a forming and transverse sealing unit of a packaging machine for producing packages form a sheet of packaging material, in accordance with the invention;
Figure 6 is a plan view of an applying unit of a packaging machine for producing packages form a sheet of packaging material, in accordance with the invention.

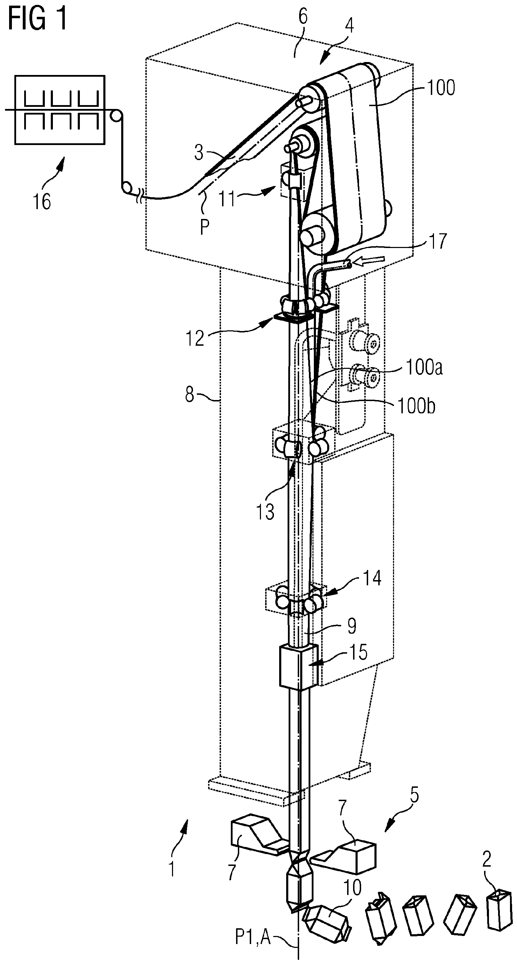

With reference to Figures 1 to 6, there is shown a packaging machine 1 for producing sealed packages 2, containing a pourable food product, such as pasteurized or UHT milk, fruit juice, wine, etc., from a packaging material 3 unwound off a reel (not shown) and fed along an advancing path P. When unwound off the real the packaging material has the shape of a planar sheet 100.

By means of known guide elements, rollers or similar devices (not shown), the sheet 100 is fed along the advancing path P through a sterilizing unit (not shown), which - in one embodiment - comprises a sterilizing bath.

In another embodiment (not shown), the sterilizing unit may comprise other sterilizing devices, for example a sterilizing device that irradiates the packaging material 3 with a low voltage electron beam.

The sheet 100 is fed along the advancing path P through a chamber 4 (shown by the dash line in Figure 1), in which the sheet 100 is maintained in a sterile-air environment.

The chamber 4 comprises a top portion 6, which communicates with the sterilizing unit, and in which the sheet 100 is guided along a vertical portion P1 and a bottom portion 8 extending vertically from the top portion 6 along the portion P1.

Inside the bottom portion 8, the sheet 100 is folded longitudinally into a cylinder to form a continuous vertical tube 9 having a longitudinal axis A coaxial with the portion P1.

The packaging machine 1 comprises a number of forming assemblies, in the embodiment shown four forming assemblies, i.e. a first forming assembly 11, a second forming assembly 12, a third forming assembly 13 and a fourth forming assembly 14 located along the portion P1 inside the chamber 4 and interacting with the sheet 100 to fold the sheet 100 gradually into a cylinder and mutually superimpose a first lateral portion 100a of the sheet 100 and a second lateral portion 100b of the sheet 100, opposite the first lateral portion 100a, to form the tube 9.

The packaging machine 1 also comprises a sealing device 15 (shown schematically in Figure 1) located along the portion P1, downstream of the fourth forming assembly 14, and which provides for sealing the superimposed first lateral portion 100a and second lateral portion 100b, so as to form a fluid-tight longitudinal seal in the tube 9.

The tube 9 is filled continuously with the sterilized or sterile-processed food product by means of a pour conduit 17 extending partly inside the tube 9 and forming part of a filling circuit (not shown).

The packaging machine 1 further comprises a forming and transversal sealing unit 5 provided with pairs of jaws 7 that interact with the tube 9 to seal and cut the tube 9 along equally spaced transverse sections to form packs 10.

The packaging machine 2 also comprises a folding unit (not shown) in which the packs 10 are subjected to successive mechanical folding operations to obtain the packages 2.

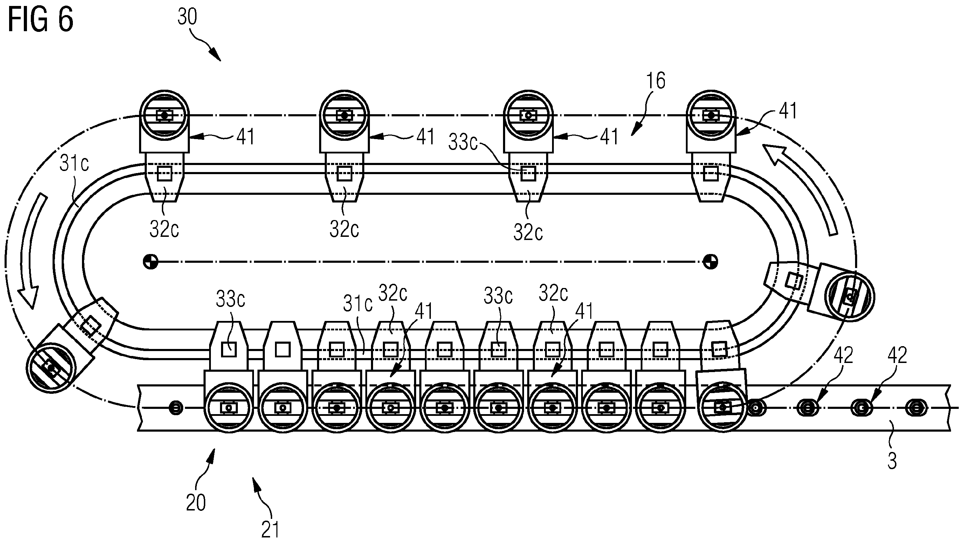

The packaging machine 1 may also comprise an application unit 16, located upstream of the sterilizing unit along path P, which applies opening devices to the sheet 100. The application unit 16 is conveniently defined by a station for molding plastic material to form a pouring spout 42 (Figure 6) of the opening device, and through which the sheet 100 is fed in steps. At the output of the application unit 16, the sheet 100 is provided, along an intermediate longitudinal portion thereof, with a succession of equally spaced spouts 42.

The packaging material 3 comprises a plurality of marks 20 associated with corresponding portions 21 of the packaging material 3.

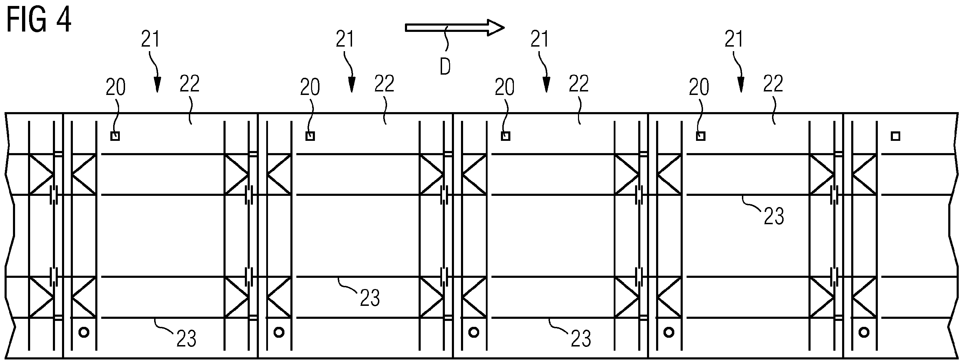

In the embodiment shown in Figure 4, the packaging material 3 comprises a plurality of units 22 arranged one after the other along a direction D of the packaging material 3, each unit 22 being intended to form - once folded - a corresponding package 2. In the embodiment shown in Figure 4, each unit 22 defines a corresponding portion 21.

The units 22 are identical to each other; in particular the units 22 have the same length in the direction D. Each unit 22 may carry a design that - once the packaging material 3 is folded - constitutes an outer ornamentation of the package 2.

Each unit 22 may comprise a pattern of creasing lines 23 along which the packaging material 3 is folded in the packaging machine 1 to form a corresponding package 2. In particular, all the units 22 may have the same pattern of creasing lines 23.

Each mark 20 is arranged in a predetermined position with respect to the corresponding portion 21.

In the case of the above-mentioned units 22, the marks 20 are arranged in a predetermined position with respect to the corresponding pattern of creasing lines 23. In this case, the position of the mark 20 provides a univocal indication of the position of the pattern of creasing lines 23.

In one embodiment, the marks 20 are magnetic marks carrying a magnetic field. The marks 20 may be obtained through a magnetisable ink that is distributed onto the packaging material 3 when a decor is printed on the packaging material 3. The ink is subsequently magnetized, for example when the packaging material 3 is creased. In this case - as already mentioned above - the position of the pattern of creasing lines 23 matches the position of the corresponding mark 20.

In another embodiment, the marks 20 are optical marks. The marks 20 may be obtained when a decor is printed on the packaging material 3. In this case the position of the decor matches the position of the corresponding mark 20.

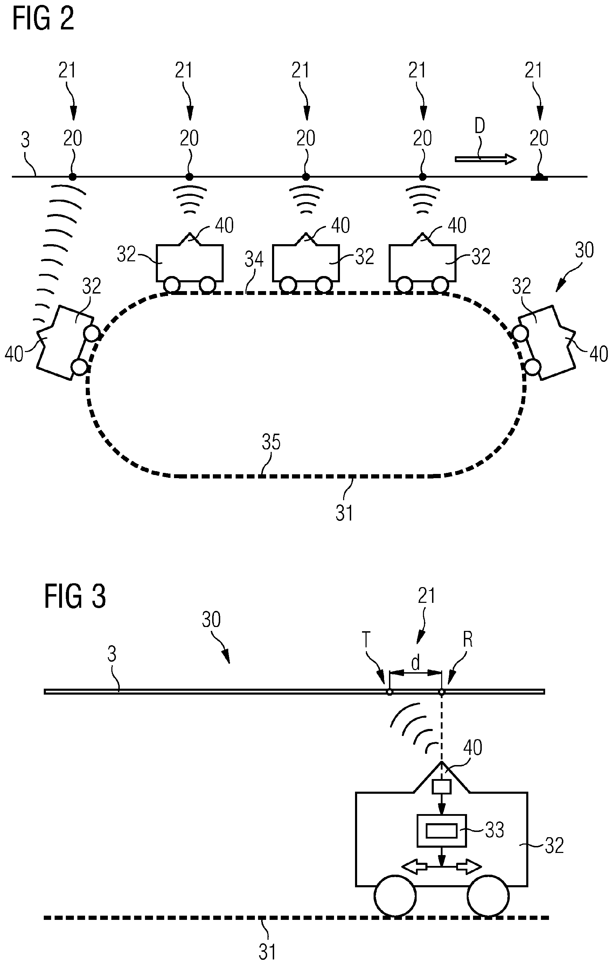

With reference to Figures 2 and 3, there is shown a working unit 30 of the packaging machine 1 comprising a track arrangement 31 and a plurality of transporting elements 32 movable along the track arrangement 31 independently from each other.

The track arrangement 31 houses a stator armature formed by a plurality of individually-excitable solenoids (not shown) and the transporting elements 32 house permanent magnets (not shown).

The transporting elements 32 are independently movable along the track arrangement 31 by individually controlling the solenoids.

In another embodiment, the track arrangement 31 houses the permanent magnets and the transporting elements 32 house the individually-excitable solenoids.

Each transporting element 32 is arranged for supporting a tool 40, or a device, of the packaging machine 1, which carries out a certain working operation on a corresponding portion 21 of the packaging material 3.

In the embodiment shown in Figures 2 and 3, the track arrangement 31 has the shape of a closed loop and comprises a working portion 34, along which the tools 40 - carried by the transporting elements 32 - interact with the packaging material 3, and a return portion 35.

Each transporting element 32 comprises a sensor device 33 arranged for detecting a corresponding mark 20 and generating a signal indicating the position of the mark 20 with respect to the transporting element 33.

In case the marks 20 are magnetic marks, the sensor devices 33 comprise magnetic sensors.

In case the marks 20 are optical marks, the sensor devices 33 comprise optical sensors.

The marks 20 can be any kind of marks applied to, or associated with, or embedded in, the packaging material 3.

In the same way, the sensor devices 33 can be any kind of sensors able to read the corresponding marks 20.

The packaging machine 1 further comprises a control unit (not shown) arranged to control the position of the transporting element 32 along the track arrangement 31 on the basis of the above-mentioned signal.

In particular, the sensor device 33 detects the distance of the mark 20 form the transporting element and sends the signal to the control unit.

The control unit, on the basis of the signal, evaluates the difference between the real position R of the transporting element 32 with respect to the portion 21 of the packaging material 3 carrying the mark 20 and a target position T of the transporting element 32 with respect to the portion 21 of the packaging material 3 carrying the mark 20. In other words, the control unit calculates the distance d between the real position R and the target position T.

The difference between the real position R and the target position T may be due to the deformability of the packaging material 3.

Subsequently, the control unit drives the transporting element 32 along the track arrangement 31 so as to minimize the distance d. In other words, the control unit drives the transporting element 32 along the track arrangement 31 so that the real position R corresponds to the target position T.

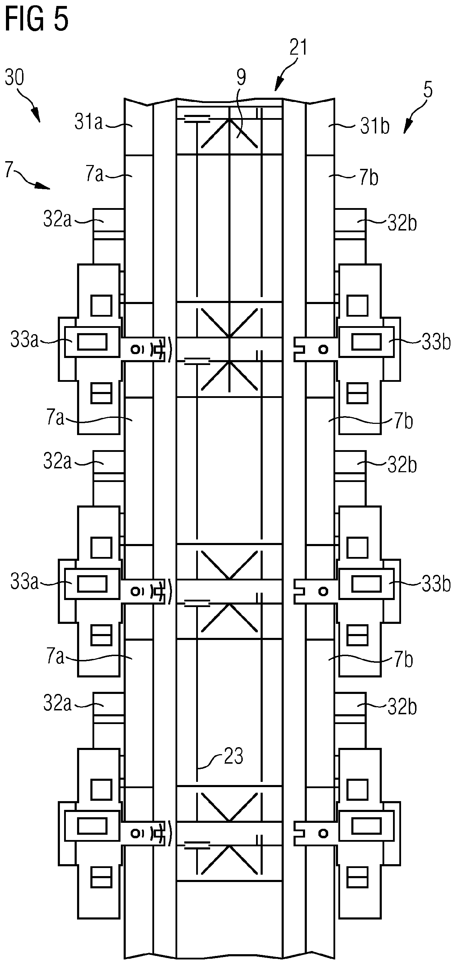

With reference to Figure 5, there is shown an embodiment in which the working unit 30 is the forming and transverse sealing unit 5 of the packaging machine 1.

The forming and transverse sealing unit 5 comprises a plurality of pairs of jaws 7 that are movably independently from each other.

In this case, the track arrangement 31 comprises a first track 31a on which a plurality of first transporting elements 32a is movable and a second track 31b on which a plurality of second transporting elements 32b is movable.

The first track 31a and the second track 31b are parallel to each other and arranged on opposite sides of the tube 9 of packaging material 3.

In particular, each pair of jaws 7 comprises a first jaw 7a carried by a first transporting element 32a and a second jaw 7b carried by a second transporting element 32b.

In one embodiment, the first jaw 7a supports a sealing element (not shown) and the second jaw 7b supports a counter-pressure element (not shown), which - during operation - cooperates with the sealing element.

Each first transporting element 32a comprises a first sensor device 33a.

Each second transporting element 32b comprises a second sensor device 33b.

During operation, the first sensor device 33a and the second sensor device 33b detect the position of a mark 20 associated with the portion 21 of packaging material 3 - already folded in the tube configuration - which has to be formed and sealed.

The control unit evaluates the difference between the real position R of the first transporting element 32a, i.e. of the first jaw 7a, and the target position T of the first transporting element 32a, i.e. of the first jaw 7a, and moves the first transporting element 32a along the first track 31a so as to minimize the distance d between the real position R and the target position T.

In the same way, the control unit evaluates the difference between the real position R of the second transporting element 32b, i.e. of the second jaw 7b, and the target position T of the second transporting element 32b, i.e. of the second jaw 7b, and moves the second transporting element 32b along the second track 31b so as to minimize the distance d between the real position R and the target position T.

In this way, the first jaw 7a and the second jaw 7b are arranged in the correct position with respect to the portion 20. This allows obtaining a good folding and sealing of the packaging material 3 and, therefore, a good quality package 2.

With reference to Figure 6, there is shown an embodiment in which the working unit 30 is the application unit 16 of the packaging machine 1.

The application unit 16 comprises a plurality of moulds 41 that are movable independently from each other.

In this case, the track arrangement 31 comprises a track 31c on which a plurality transporting elements 32c is movable, each transporting element 32c supporting a corresponding mould 41.

Each transporting element 32c comprises a sensor device 33c.

During operation, the sensor device 33c detects the position of a mark 20 associated with the portion 21 of packaging material 3 on which a spout 42 of an opening device has to be formed.

The control unit evaluates the difference between the real position R of the transporting element 32c, i.e. of the mould 41, and the target position T of the transporting element 32c, i.e. of the mould 41, and moves the transporting element 32c along the track 31c so as to minimize the distance d between the real position R and the target position T.

In this way, the mould 41 is arranged in the correct position with respect to the portion 20. This allows molding the molten plastic material in the correct zone of the portion 21 and, therefore, obtaining a good quality spout 42.

Owing to the fact that each transporting element 32 comprises a sensor device 33, and to the fact that each transporting device 32 is movable independently from the other transporting devices 32 on the track arrangement 31, the tool 40 can be positioned very precisely with respect to the portion 21 of the packaging material 3 on which a desired operation has to be carried out. In addition, the position of the tool 40 with respect to the portion 21 is not adversely affected by the deformation of the packaging material 3.

Clearly, changes may be made to the packaging machine as described and illustrated herein without, however, departing from the scope of the present invention as defined in the accompanying claims.

## Claims

1. Packaging machine for producing packages (2) from a sheet of packaging material (3), said packaging material (3) comprising a plurality of marks (20) associated with corresponding portions (21) of said packaging material (3), said packaging machine comprising a working unit (30) having a track arrangement (31) and a plurality of transporting elements (32), each transporting element (32) supporting a tool (40) arranged for carrying out a working operation on said packaging material (3), said transporting elements (32) being movable on said track arrangement (31) independently from each other, wherein said working unit (30) is a forming and transverse sealing unit (5) in which a tube (9) formed with said packaging material (3) and filled with a product to be packaged is sealed and cut along equally spaced transverse sections to form packs (10) that are subsequently subjected to mechanical folding operations to obtain said packages (2), wherein said forming and transverse sealing unit (5) comprises a plurality of pairs of jaws (7) arranged for interacting with said tube (9) to seal and cut said tube (9) and movable independently from each other, wherein said track arrangement (31) comprises a first track (31a) on which a plurality of first transporting elements (32a) is movable and a second track (31b) on which a plurality of second transporting elements (32b) is movable, each pair of jaws (7) comprises a first jaw (7a) carried by a first transporting element (32a) of said plurality of first transporting elements and a second jaw (7b) carried by a second transporting element (32b) of said plurality of second transporting elements, **characterized in that** each of said transporting elements (32) comprises a sensor device (33) arranged for detecting a corresponding mark (20) and generating a signal indicating the position of said mark (20) with respect to said transporting element (32), said packaging machine further comprising a control unit arranged to control the position of said transporting element (32) along said track arrangement (31) on the basis of said signal, and **in that** each first transporting element (32a) comprises a first sensor device (33a) and each second transporting element (32b) comprises a second sensor device (33b).

2. Packaging machine according to claim 1, wherein said first track (31a) and said second track (31b) are parallel to each other and arranged on opposite sides of said tube (9).

3. Packaging machine according to claim 1, or 2, wherein said track arrangement (31) houses individually-excitable solenoids and said transporting elements (32) house permanent magnets, or said transporting elements (32) house individually-excitable solenoids and said track arrangement (31) houses permanent magnets, said transporting elements (32) being independently movable along said track arrangement (31) by individually controlling said solenoids.

## Patentansprüche

1. Verpackungsmaschine zum Herstellen von Verpackungen (2) aus einem Bogen Verpackungsmaterial (3), wobei das Verpackungsmaterial (3) mehrere Markierungen (20) umfasst, die entsprechenden Abschnitten (21) des Verpackungsmaterials (3) zugeordnet sind, wobei die Verpackungsmaschine eine Bearbeitungseinheit (30) mit einer Schienenanordnung (31) und mehreren Transportelementen (32) umfasst, wobei jedes Transportelement (32) ein Werkzeug (40) trägt, das ausgestaltet ist, einen Bearbeitungsvorgang an dem Verpackungsmaterial (3) durchzuführen, wobei die Transportelemente (32) an der Schienenanordnung (31) unabhängig voneinander bewegbar sind, wobei die Bearbeitungseinheit (30) eine Form- und Querversiegelungseinheit (5) ist, in der eine Röhre (9), die aus dem Verpackungsmaterial (3) geformt und mit einem zu verpackenden Produkt gefüllt ist, versiegelt und entlang gleichmäßig beabstandeter querverlaufender Abschnitte geschnitten wird, um Packungen (10) zu formen, die anschließend mechanischen Faltvorgängen unterzogen werden, um die Verpackungen (2) zu erhalten, wobei die Form- und Querversiegelungseinheit (5) mehrere Paare von Backen (7) umfasst, die ausgestaltet sind, mit der Röhre (9) zusammenzuwirken, um die Röhre (9) zu versiegeln und zu schneiden, und die unabhängig voneinander beweglich sind, wobei die Schienenanordnung (31) eine erste Schiene (31a), an der mehrere erste Transportelemente (32a) bewegbar sind, und eine zweite Schiene (31b), an der mehrere zweite Transportelemente (32b) bewegbar sind, umfasst, wobei jedes Paar von Backen (7) eine erste Backe (7a), die durch ein erstes Transportelement (32a) der mehreren ersten Transportelemente getragen ist, und eine zweite Backe (7b), die durch ein zweites Transportelement (32b) der mehreren zweiten Transportelemente getragen ist, umfasst, **dadurch gekennzeichnet, dass** jedes der Transportelemente (32) eine Sensorvorrichtung (33) umfasst, die zum Detektieren einer entsprechenden Markierung (20) und Erzeugen eines die Position der Markierung (20) in Bezug auf das Transportelement (32) anzeigenden Signals ausgestaltet ist, wobei die Verpackungsmaschine ferner eine Steuereinheit umfasst, die ausgestaltet ist, die Position des Transportelements (32) entlang der Schienenanordnung (31) auf Grundlage des Signals zu steuern, und dass jedes erstes Transportelement (32a) eine erste Sensorvorrichtung (33a) umfasst und jedes zweite Transportelement (32b) eine zweite Sensorvorrichtung (33b) umfasst.

2. Verpackungsmaschine nach Anspruch 1, wobei die erste Schiene (31a) und die zweite Schiene (31b) parallel zueinander und an gegenüberliegenden Seiten der Röhre (9) angeordnet sind.

3. Verpackungsmaschine nach Anspruch 1 oder 2, wobei die Schienenanordnung (31) einzeln betätigbare Solenoide aufnimmt und die Transportelemente (32) Dauermagnete aufnehmen, oder die Transportelemente (32) einzeln betätigbare Solenoide aufnehmen und die Schienenanordnung (31) Dauermagnete aufnimmt, wobei die Transportelemente (32) entlang der Schienenanordnung (31) durch einzelnes Steuern der Solenoide unabhängig voneinander bewegbar sind.

## Revendications

1. Machine d'emballage pour la production d'emballages (2) à partir d'une feuille de matériau d'emballage (3), ledit matériau d'emballage (3) comprenant une pluralité de marques (20) associées à des parties correspondantes (21) dudit matériau d'emballage (3), ladite machine d'emballage comprenant une unité de travail (30) ayant un agencement de glissières (31) et une pluralité d'éléments de transport (32), chaque élément de transport (32) supportant un outil (40) prévu pour effectuer une opération de travail sur ledit matériau d'emballage (3), lesdits éléments de transport (32) pouvant être déplacés sur ledit agencement de glissières (31) indépendamment les uns des autres, ladite unité de travail (30) étant une unité de formage et de scellage transversal (5) dans laquelle un tube (9) formé avec ledit matériau d'emballage (3) et rempli d'un produit à emballer est scellé et découpé le long de sections transversales espacées régulièrement pour former des paquets (10) qui sont ensuite soumis à des opérations de pliage mécaniques pour obtenir lesdits emballages (2), ladite unité de formage et de scellage transversal (5) comprenant une pluralité de paires de mâchoires (7) prévues pour coopérer avec ledit tube (9) de manière à sceller et couper ledit tube (9) et pouvant être déplacées indépendamment les unes des autres, ledit agencement de glissières (31) comprenant une première glissière (31a) sur laquelle une pluralité de premiers éléments de transport (32a) peut être déplacée et une deuxième glissière (31b) sur laquelle une pluralité de deuxièmes éléments de transport (32b) peut être déplacée, chaque paire de mâchoires (7) comprenant une première mâchoire (7a) portée par un premier élément de transport (32a) de ladite pluralité de premiers éléments de transport et une deuxième mâchoire (7b) portée par un deuxième élément de transport (32b) de ladite pluralité de deuxièmes éléments de transport, **caractérisée en ce que** chacun desdits éléments de transport (32) comprend un dispositif de capteur (33) prévu pour détecter une marque correspondante (20) et pour générer un signal indiquant la position de ladite marque (20) par rapport audit élément de transport (32), ladite machine d'emballage comprenant en outre une unité de contrôle prévue pour contrôler la position dudit élément de transport (32) le long dudit agencement de glissières (31) sur la base dudit signal, et **en ce que** chaque premier élément de transport (32a) comprend un premier dispositif de capteur (33a) et chaque deuxième élément de transport (32b) comprend un deuxième dispositif de capteur (33b).

2. Machine d'emballage selon la revendication 1, dans laquelle ladite première glissière (31a) et ladite deuxième glissière (31b) sont parallèles l'une à l'autre et sont disposées sur des côtés opposés dudit tube (9).

3. Machine d'emballage selon la revendication 1 ou 2, dans laquelle ledit agencement de glissières (31) reçoit des solénoïdes pouvant être excités individuellement et lesdits éléments de transport (32) reçoivent des aimants permanents, ou lesdits éléments de transport (32) reçoivent des solénoïdes pouvant être excités individuellement et ledit agencement de glissières (31) reçoit des aimants permanents, lesdits éléments de transport (32) pouvant être déplacés indépendamment le long dudit agencement de glissières (31) en commandant de manière individuelle lesdits solénoïdes.
